# FASCICULE DE BREVET EUROPEEN

(11) **EP 2 540 622 B1**
(45) Date de publication et mention de la délivrance du brevet: **06.08.2014**
(21) Numéro de dépôt: 12170616.2
(22) Date de dépôt: 01.06.2012
(51) Int. Cl.: B64C 25/50

(54) **Procédé pour commander l'orientation d'une partie orientable d'un atterrisseur d'aéronef**
Verfahren zum Steuern der Richtung eines ausrichtbaren Teils eines Flugzeugfahrwerks
Method for controlling the orientation of a steerable portion of an aircraft landing gear

(30) Priorité: 27.06.2011 FR 1155705
(43) Date de publication de la demande: 02.01.2013
(73) Titulaire: Messier-Bugatti-Dowty, 78140 Vélizy-Villacoublay (FR)
(72) Inventeur: Benmoussa, Michaël, 92160 ANTONY (FR)
(74) Mandataire: Parzy, Benjamin Alain

(56) Documents cités:
- EP-A2- 2 020 379
- US-A1- 2011 147 514
- DACKO L ET AL: "Landing gear steer-by-wire control system; digital vs. analog study", 19900123; 19900123 - 19900125, 23 janvier 1990 (1990-01-23), pages 215-220, XP010001003,

## Description

L'invention est relative à un procédé pour commander l'orientation d'une partie orientable d'un atterrisseur d'aéronef.

### ARRIERE-PLAN TECHNOLOGIQUE

Certains des atterrisseurs comportent une partie basse orientable, en particulier les atterrisseurs auxiliaires, afin notamment de permettre la direction de l'aéronef au sol. A cet effet, l'atterrisseur est équipé d'actionneurs (vérins montés en push-pull, crémaillère attaquant une roue dentée) permettant de faire pivoter cette partie orientable en réponse à un ordre d'orientation généré par exemple au moyen d'un volant de commande dans le cockpit.

Une rétroaction est assurée au moyen d'un capteur de rotation disposé sur l'atterrisseur pour mesurer l'angle de rotation de la partie orientable et délivrer une information de position angulaire qui est utilisée pour former une boucle de rétroaction d'un asservissement en position angulaire.

De façon connue en soi, le capteur de rotation est doublé par un second capteur de rotation de sorte que deux informations de position angulaire sont générées. L'une seule des informations est utilisée pour l'asservissement en position, l'autre information angulaire étant utilisée à des fins de surveillance du bon fonctionnement du premier capteur de position angulaire. En cas de désaccord entre les deux informations, l'asservissement est interrompu et la partie orientable de l'atterrisseur est rendue librement orientable. Le pilote de l'aéronef peut alors diriger l'aéronef par freinage différentiel.

Il est apparu que dans certaines circonstances, notamment lors de virages serrés, ou encore en ligne droite lors de freinages, ou simplement en cas de centrage avant induisant un effort statique important sur l'atterrisseur, les informations délivrées par les capteurs de position angulaire pouvaient présenter un certain décalage vis-à-vis de l'angle d'orientation effectivement atteint par la partie orientable de l'atterrisseur.

US 2011/01475 A divulgue un procédé selon le préambule de la revendication 1.

### OBJET DE L'INVENTION

L'invention a pour objet un procédé de commande de l'orientation d'une partie orientable d'un atterrisseur d'aéronef amélioré, notamment du point de vue de la précision de l'asservissement.

### DESCRIPTION DE L'INVENTION

En vue de la réalisation de ce but, on propose un procédé de commande de l'orientation d'une partie orientable d'un atterrisseur d'aéronef équipé d'organes d'orientation de la partie orientable et d'au moins deux capteurs de position angulaire de la partie orientable pour délivrer chacun une information de position angulaire de la partie orientable, dans lequel, on commande les organes d'orientation au moyen d'un asservissement utilisant une information représentative de la position angulaire de la partie orientable. Selon l'invention, on utilise comme information représentative une moyenne des informations de position angulaire délivrées par les deux capteurs de position angulaire.

Ainsi, l'information représentative est moins sensible aux déformations de l'atterrisseur qui peuvent perturber les informations données par les capteurs de position angulaire. Ces déformations se manifestent notamment dans les circonstances évoquées précédemment.

De préférence, les capteurs de position angulaire sont disposés sur l'atterrisseur de façon diamétralement opposée, de part et d'autre de celui-ci relativement à un plan de symétrie de l'aéronef.

De cette façon, les erreurs de position affectant l'un des capteurs de position angulaire sont compensées de façon plus efficace par les erreurs de position affectant l'autre des capteurs de position angulaire.

### BREVE DESCRIPTION DES FIGURES

L'invention sera mieux comprise en référence aux figures des dessins annexés parmi lesquelles:
- la figure 1 est une vue de côté schématique d'un atterrisseur d'aéronef à partie basse orientable ;
- la figure 2 est une vue de dessus de l'atterrisseur de la figure 1 ;
- la figure 3 est un schéma d'un asservissement de position angulaire mis en oeuvre selon l'invention

### DESCRIPTION DETAILLEE D'UN MODE DE REALISATION DE L'INVENTION

En référence aux figures, un atterrisseur auxiliaire d'aéronef comporte typiquement un caisson 1 monté articulé sur la structure de l'aéronef. Un organe de contreventement (non représenté) s'étendant entre la structure de l'aéronef et la caisson permet de stabiliser le caisson 1 et donc l'atterrisseur dans la position déployée représentée ici.

Dans le caisson 1 coulisse une tige 2 dont l'extrémité inférieure porte un essieu 3 recevant des roues 4. Un collier 5 est monté tournant sur la partie basse du caisson 1 pour être orienté de façon commandée par un organe d'orientation, ici des vérins 6 montés en « push-pull ». Le collier 5 et la tige 1 sont liés en rotation par un compas 7, de sorte que l'orientation du collier 5 entraîne l'orientation de la tige 2 et donc des roues 4. Des capteurs de position angulaire 8 sont disposés sur le caisson pour mesurer la position angulaire du collier 5 et donc des roues 4. Les capteurs de position angulaire 8 délivrent des informations de position angulaire qui sont exploitées par un calculateur d'orientation disposé dans l'aéronef qui commande l'orientation des roues 4 en réponse à un ordre d'orientation généré par le pilote, par appui sur les pédales ou rotation d'un volant.

Tout ceci est bien connu et n'est rappelé qu'à titre d'information pour situer le contexte de l'invention.

Selon l'invention, le calculateur d'orientation est adapté à calculer une moyenne des informations de position angulaire générées par les capteurs de position angulaire 8 et exploiter cette moyenne pour mettre en oeuvre un asservissement en position angulaire des roues 4 en vue de commander les vérins 6 de l'organe d'orientation.

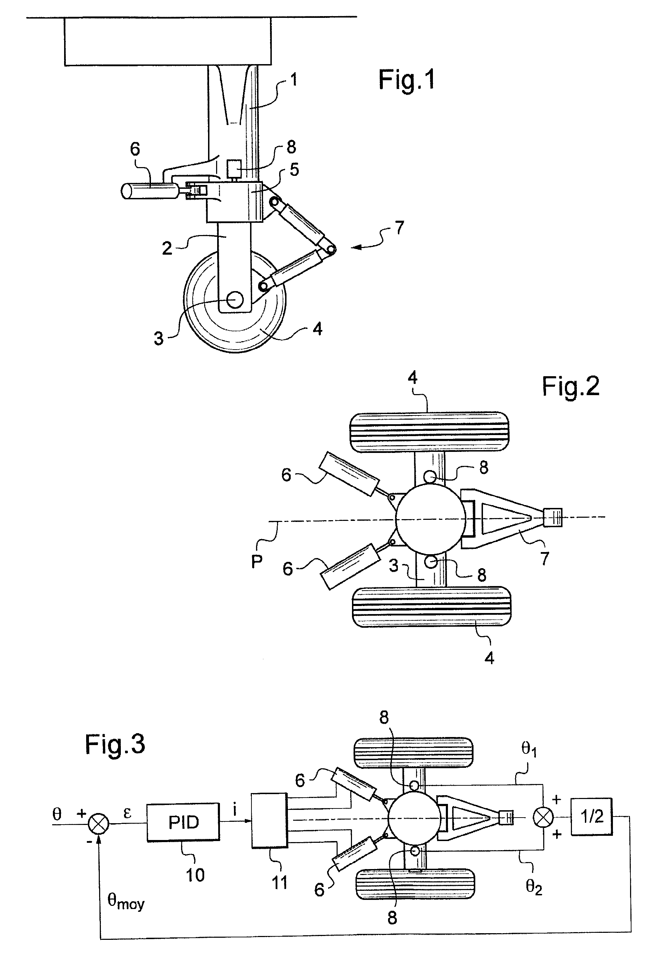

L'exploitation de la moyenne des informations de positions angulaires permet de diminuer l'effet des déformations de l'atterrisseur, et notamment de la flexion latérale de l'atterrisseur lors de virages de l'aéronef. En effet, on sait que lors des virages, les efforts latéraux qui s'exercent sur les pneumatiques de roues ont tendance à faire fléchir l'atterrisseur, ce qui provoque une déviation de l'information angulaire générée par les capteurs. Cependant, si les capteurs de position angulaire sont disposés de façon sur l'atterrisseur de façon symétrique par rapport à un plan de symétrie longitudinal P passant par l'axe longitudinal de l'aéronef, (comme illustré à la figure 2), la déviation subie par l'un des capteurs du fait de la flexion latérale de l'atterrisseur est substantiellement compensée par la déviation inverse subie par l'autre capteur de position angulaire, de sorte que la moyenne des deux signaux est bien plus représentative de la position angulaire réelle des roues. On améliore ainsi la qualité de l'information de position angulaire, et donc la précision de l'asservissement. De même, lors d'un freinage en ligne droite, ou lorsque l'aéronef est centré avant, l'atterrisseur subit une flexion longitudinale qui est susceptible d'engendrer des erreurs sur les informations angulaires issues des capteurs. La moyenne des informations angulaires selon l'invention permet de compenser au moins partiellement l'effet des déformations induites par cette flexion.

Un asservissement est illustré à la figure 3, où l'on voit que le signal de rétroaction θmoy est constitué par la moyenne des informations de position angulaire θ1 et θ2 générées par les deux capteurs de position angulaire 8. Plus précisément, l'asservissement, qui est mis en oeuvre par le calculateur d'orientation, comporte le calcul d'une erreur ε entre une consigne d'orientation θ provenant par exemple d'un volant dans le cockpit, et le signal de rétroaction θmoy. L'erreur est ici fournie à un PID 10 qui génère un courant de commande i d'une servovalve 11 qui alimente les vérins 6 de l'organe d'orientation. Les capteurs de position angulaire 8 génèrent en réponse des informations de position angulaires θ1 et θ2 qui sont sommées puis divisées par deux pour en obtenir la moyenne arithmétique utilisée comme signal de rétroaction.

Dans la position symétrique des capteurs, il est possible de faire l'hypothèse que les capteurs de position angulaires sont influencées de la même façon (quoique dans des sens opposés) par les déformations perturbatrices subies par l'atterrisseur. Il sera alors avantageux d'utiliser une moyenne arithmétique des informations de position angulaire générées par les capteurs de position angulaire. De préférence, les capteurs de position angulaire sont disposés de façon diamétralement opposée.

Cependant, si les capteurs de position angulaire ne sont pas disposés symétriquement, il sera avantageux d'utiliser une moyenne pondérée des informations de position angulaire pour tenir compte des susceptibilités respectives de chacun des capteurs de position angulaire aux déformations perturbatrices subies par l'atterrisseur lors d'un virage.

## Revendications

1. Procédé de commande de l'orientation d'une partie orientable (2,3,4,5) d'un atterrisseur d'aéronef équipé d'un organe d'orientation (6) de la partie orientable et d'au moins deux capteurs de position angulaire (8,8) de la partie orientable pour délivrer chacun une information de position angulaire θ1, θ2) de la partie orientable, dans lequel, on commande l'organe d'orientation au moyen d'un asservissement utilisant une information représentative de la position angulaire de la partie orientable, **caractérisé en ce que** l'on utilise comme information représentative une moyenne θmoy) des informations de position angulaire délivrées par les deux capteurs de position angulaire.

2. Procédé selon la revendication 1, dans lequel les capteurs de position angulaire sont placés sur l'atterrisseur de façon symétrique par rapport à un plan de symétrie longitudinal de l'aéronef.

3. Procédé selon la revendication 2, dans lequel les capteurs de position angulaire sont placés sur l'atterrisseur de façon diamétralement opposée.

4. Procédé selon la revendication 2, dans laquelle la moyenne des informations de position angulaire est une moyenne arithmétique.

## Patentansprüche

1. Verfahren zum Steuern der Ausrichtung eines lenkbaren Teils (2, 3, 4, 5) eines Flugzeugfahrwerks, das mit einem Ausrichtungsorgan (6) zum Ausrichten des lenkbaren Teils und mit mindestens zwei Winkelpositionssensoren (8, 8) zum Erfassen der Winkelposition des lenkbaren Teils ausgestattet ist, um jeweils eine Winkelpositionsinformation (θ1, θ2) des lenkbaren Teils zu liefern, wobei man das Ausrichtungsorgan mittels einer Regelung steuert, die eine für die Winkelposition des lenkbaren Teils repräsentative Information nutzt, **dadurch gekennzeichnet, dass** man als repräsentative Information einen Mittelwert (θmoy) der von den beiden Winkelpositionssensoren gelieferten Winkelpositionsinformationen nutzt.

2. Verfahren nach Anspruch 1, wobei die Winkelpositionssensoren an dem Fahrwerk bezogen auf eine Längssymmetrieebene des Flugzeugs symmetrisch angeordnet sind.

3. Verfahren nach Anspruch 2, wobei die Winkelpositionssensoren an dem Fahrwerk diametral entgegengesetzt angeordnet sind.

4. Verfahren nach Anspruch 2, wobei der Mittelwert der Winkelpositionsinformationen ein arithmetischer Mittelwert ist.

## Claims

1. A method of controlling the steering of a steerable portion (2, 3, 4, 5) of an aircraft undercarriage that is fitted both with a steering member (6) for steering the steerable portion and with at least two angular position sensors (8, 8) for sensing the angular position of the steerable portion in order to deliver respective signals representative of the angular position (θ₁, θ₂) of the steerable portion, wherein the steering member is controlled by means of servo-control using information that is representative of the angular position of the steerable portion, the method being **characterized in that** the information representative of the angular position that is used is a mean (θmoy) of the angular positions sensed by the two angular position sensors.

2. A method according to claim 1, wherein the angular position sensors are arranged on the undercarriage in symmetrical manner about a longitudinal plane of symmetry of the aircraft.

3. A method according to claim 2, wherein the angular position sensors are placed on the undercarriage in diametrically-opposite manner.

4. A method according to claim 2, wherein the mean of the angular position signals is an arithmetic mean.
